(19) Europäisches Patentamt
European Patent Office
Office européen des brevets

(11) Veröffentlichungsnummer: **0 522 404 A2**

(12) # EUROPÄISCHE PATENTANMELDUNG

(21) Anmeldenummer: **92110973.2**

(22) Anmeldetag: **29.06.92**

(51) Int. Cl.5: **C08G 63/66**, C08G 63/60, C08G 81/00

(30) Priorität: **06.07.91 DE 4122409**

(43) Veröffentlichungstag der Anmeldung: **13.01.93 Patentblatt 93/02**

(84) Benannte Vertragsstaaten: **BE DE FR GB NL**

(71) Anmelder: **BASF Aktiengesellschaft**
**Carl-Bosch-Strasse 38**
**W-6700 Ludwigshafen(DE)**

(72) Erfinder: **Elbl-Weiser, Karin, Dr.**
**Ortsstrasse 45**
**W-6901 Heiligkreuzsteinach(DE)**
Erfinder: **Husemann, Christiane, Dr.**
**Joseph-von-Eichendorff-Strasse 4**
**W-6730 Neustadt(DE)**
Erfinder: **Koch, Juergen, Dr.**
**Mainstrasse 5**
**W-6708 Neuhofen(DE)**
Erfinder: **Streib, Juergen, Dr.**
**Am See 7a**
**W-6520 Worms 27(DE)**

(54) **Hochtemperaturbeständige Blockcopolykondensate.**

(57) Hochtemperaturbeständige Blockcopolykondensate, enthaltend als wesentliche Komponenten

| | | |
|---|---|---|
| A) | 50 bis 98 Gew.-% | vollaromatische thermotrope Polyesterblöcke |
| B) | 2 bis 50 Gew.-% | Polyaryletherketonblöcke mit einem mittleren Molekulargewicht $\overline{M}_n$ (Zahlenmittel) von 2200 bis 30 000 |
| und | | |
| C) | 0 bis 100 Gew.-%, bezogen auf die Summe A) und B) | faser- oder teilchenförmige Füllstoffe oder deren Mischungen. |


EP 0 522 404 A2

Die vorliegende Erfindung betrifft hochtemperaturbeständige Blockcopolykondensate, enthaltend als wesentliche Komponenten

A) 50 bis 98 Gew.-% vollaromatische thermotrope Polyesterblöcke, aufgebaut aus

$a_{1)}$ 10 bis 90 mol-% wiederkehrenden Einheiten der Formel I

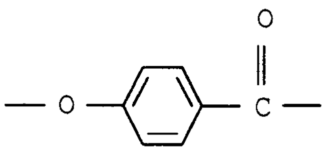

(I)

$a_{2)}$ 5 bis 45 mol-% einer Mischung aus

$a_{21)}$ 50 bis 100 mol-%, bezogen auf die Summe $a_{21)}$ + $a_{22)}$, wiederkehrenden Einheiten der Formel II

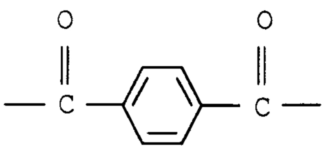

(II)

und

$a_{22)}$ 0 bis 50 mol-%, bezogen auf die Summe $a_{21)}$ + $a_{22)}$, wiederkehrenden Einheiten der Formel III

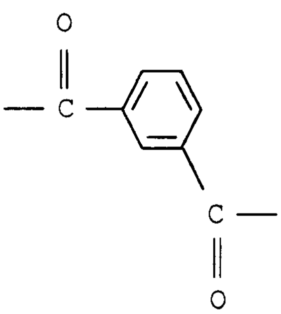

(III)

und

$a_{3)}$ 5 bis 45 mol-% einer Mischung aus

$a_{31)}$ 50 bis 100 mol-%, bezogen auf die Summe $a_{31)}$ + $a_{32)}$, mindestens einer der wiederkehrenden Einheiten IV bis VIII

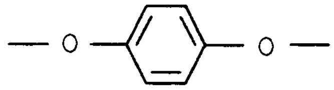

(IV)

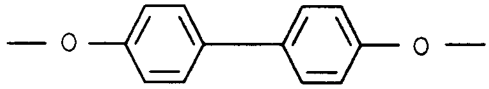

(V)

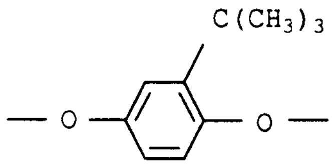

(VI)

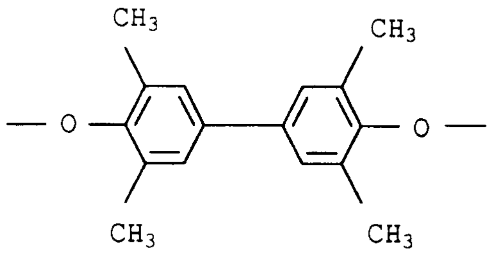

(VII)

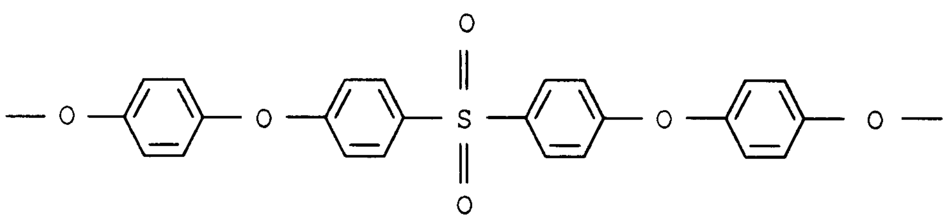

(VIII)

und

$a_{32)}$ 0 bis 50 mol-%, bezogen auf die Summe $a_{31)}$ + $a_{32)}$, mindestens einer der wiederkehrenden Einheiten der Formel IX bis XIII

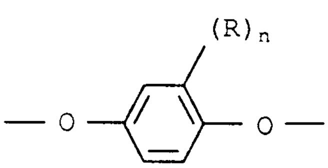

(IX)

wobei R einen Methyl- oder Phenylrest oder ein Chloratom darstellt und n den Wert 1, 2 oder 3 hat,

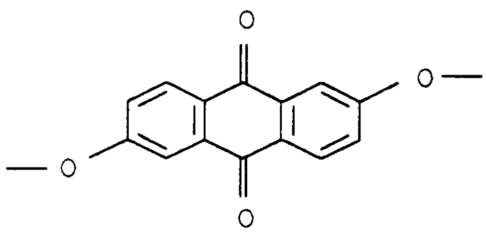

(X)

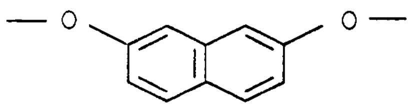

(XI)

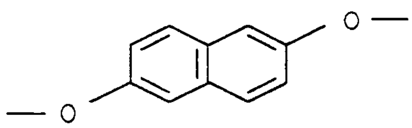

(XII)

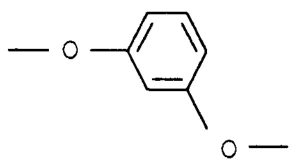

(XIII)

und wobei das molare Verhältnis der Komponenten $a_{2)}$ : $a_{3)}$ zwischen 0,9 : 1 und 1,1 : 1 liegt.

B) 2 bis 50 Gew.% Polyaryletherketonblöcke mit einem mittleren Molekulargewicht $\overline{M}_n$ (Zahlenmittel) von 2200 bis 30 000, aufgebaut aus Einheiten der allgemeinen Formel XIV

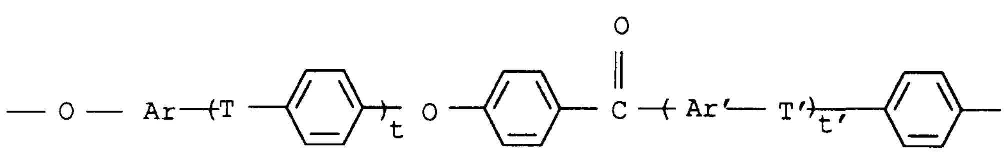

(XIV)

in denen

t und t' jeweils den Wert 0, 1, 2 oder 3 annehmen können,

T und T' -O- oder -CO- bedeuten und

Ar und Ar' für Arylgruppen mit 6 bis 14 C-Atomen stehen oder deren kernstubstituierten $C_1$- bis $C_8$-Alkyl-, $C_6$- bis $C_{20}$-Aryl- oder Halogenderivaten

oder deren statistischen Copolymerisaten oder Blockcopolymerisaten

und

C) 0 bis 100 Gew.-%, bezogen auf die Summe A) und B), faser- oder teilchenförmige Füllstoffe oder deren Mischungen.

Außerdem betrifft die Erfindung Verfahren zur Herstellung dieser hochtemperaturbeständigen Blockcopolykondensate, deren Verwendung zur Herstellung von Fasern, Folien und Formkörpern sowie die hierbei erhältlichen Fasern, Folien und Formkörper aus den hochtemperaturbeständigen Blockcopolykondensaten.

Hochtemperaturbeständige Blockcopolykondensate auf der Basis von vollaromatischen thermotropen Polyesterblöcken und Polyaryletherketonblöcken finden aufgrund ihres Eigenschaftsprofils in den verschiedensten Bereichen Verwendung, beispielsweise im Fahrzeug- und Apparatebau, in der Luft- und Raumfahrt

sowie in der Elektronik und Elektrotechnik.

Aus der EP-A 30 417 sind Mischungen von flüssigkristallinen Polymeren mit anderen Thermoplasten bekannt, deren Zähigkeiten jedoch nicht zufriedenstellend sind.

Blockcopolymere aus OH-terminierten kristallinen Polyaryletherketon-Oligomeren und flüssigkristallinen Polyestern sind in der US-A 4 668 744 beschrieben. Die Wärmeformbeständigkeiten und Fließfähigkeiten dieser Produkte lassen jedoch zu wünschen übrig.

Aus der US-A 4 837 284 sind Blockcopolymere aus Polyaryletherketon-Oligomeren mit einem mittleren Molekulargewicht von 500 bis 2000 und flüssigkristallinen Polyestern bekannt. Hierbei sind jedoch die Wärmeformbeständigkeiten unbefriedigend. Den gleichen Nachteil weisen die in der EP-A 214 612 beschriebenen Blockcopolymere auf, die aus OH-terminierten Polysulfon-Oligomeren und flüssigkristallinen Polyestern aufgebaut sind.

Der Erfindung lag daher die Aufgabe zugrunde, hochtemperaturbeständige Blockcopolykondensate zur Verfügung zu stellen, die die genannten Nachteile nicht aufweisen.

Die Aufgabe wird erfindungsgemäß gelöst durch die eingangs definierten hochtemperaturbeständigen Blockcopolykondensate. Außerdem wurden Verfahren zur Herstellung dieser hochtemperaturbeständigen Blockcopolykondensate, deren Verwendung zur Herstellung von Fasern, Folien und Formkörpern sowie die hierbei erhältlichen Fasern, Folien und Formkörper aus den hochtemperaturbeständigen Blockcopolykondensaten als wesentliche Komponente gefunden.

Als Komponente A) enthalten die erfindungsgemäßen hochtemperaturbeständigen Blockcopolykondensate 50 bis 98 Gew.-%, vorzugsweise 60 bis 95 Gew.-%, insbesondere 65 bis 93 Gew.-% vollaromatische thermotrope Polyesterblöcke, welche sich aus den nachstehend im Detail beschriebenen Komponenten $a_{1)}$ bis $a_{3)}$ aufbauen.

Bei der Komponente $a_{1)}$, deren Anteil an den vollaromatischen thermotropen Polyesterblöcken 10 bis 90, vorzugsweise 20 bis 70 mol-%, bezogen auf die Summe der molaren Anteile der Komponenten $a_{1)}$ bis $a_{3)}$, beträgt, handelt es sich um wiederkehrende Einheiten der Formel I

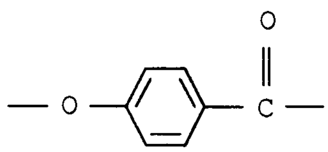

(I),

die sich von 4-Hydroxybenzoesäure bzw. deren esterbildenden Derivaten ableiten.

Die Einheiten der Formeln II und III

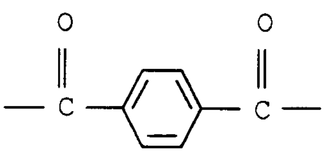

(II)

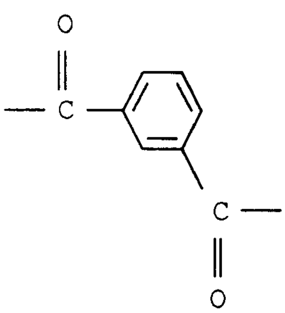

(III),

deren Anteil insgesamt 5 bis 45, vorzugsweise 15 bis 40 und insbesondere 20 bis 35 mol-%, bezogen auf die Summe der molaren Anteile der Komponenten $a_{1)}$ bis $a_{3)}$, betrdgt, leiten sich ab von Terephthalsdure (Formel II) und Isophthalsdure (Formel III) bzw. deren esterbildenden Derivaten. Dabei machen die Einheiten der Formel II (a♂±) 50 bis 100 mol-%, bezogen auf die Summe $a_{21)}$ + $a_{22)}$ und entsprechend die Einheiten der Formel III (a♂♂) 0 bis 50 mol-%, bezogen auf die Summe von $a_{21)}$ + $a_{22)}$, aus.

Als Komponente $a_{3)}$ enthalten die vollaromatischen thermotropen Polyesterblvcke A) 5 bis 45, vorzugsweise 15 bis 40 und insbesondere 20 bei 35 mol-%, bezogen auf die Summe der molaren Anteile der Komponenten $a_{1)}$ bis $a_{3)}$, einer Mischung aus

$a_{31)}$ 50 bis 100 mol-%, bezogen auf die Summe $a_{31)}$ + $a_{32)}$ mindestens einer der wiederkehrenden Einheiten IV bis VIII

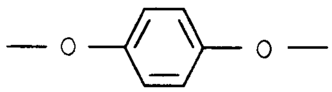

(IV)

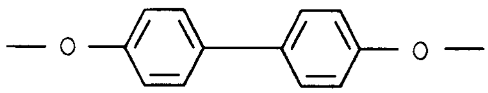

(V)

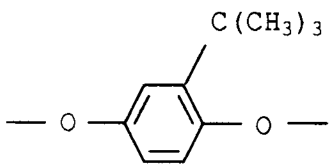

(VI)

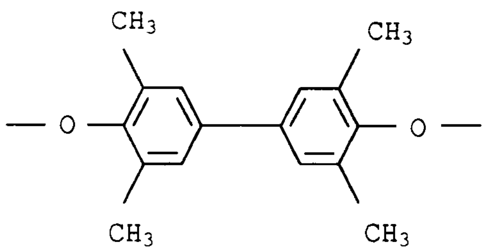

(VII)

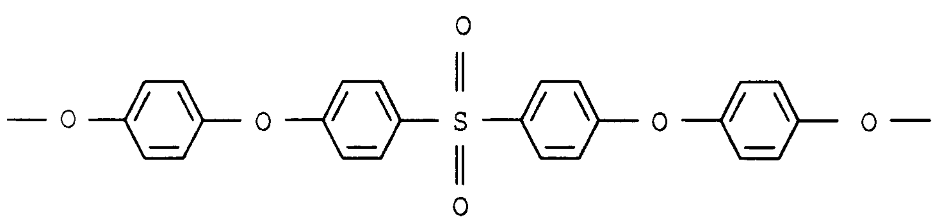

(VIII)

und

$a_{32)}$ 0 bis 50 mol-%, bezogen auf die Summe $a_{31)}$ + $a_{32)}$, mindestens einer der wiederkehrenden Einheiten der Formeln IX bis XIII

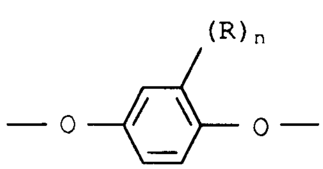

(IX)

wobei R eine Methyl- oder Phenylgruppe oder ein Chloratom darstellt und n den Wert 1, 2 oder 3 hat,

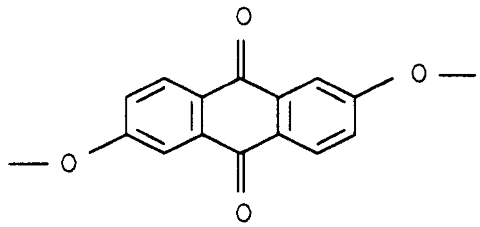

(X)

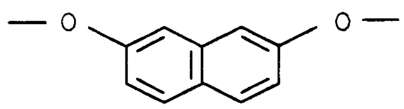

(XI)

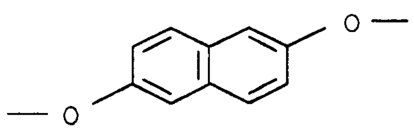

(XII)

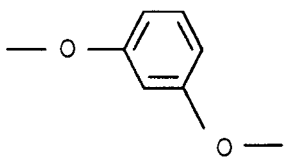

(XIII)

Ausgangsverbindungen für die Einheiten der Formeln IV bis XIII sind:

| Einheit | Ausgangsverbindung |
|---|---|
| IV | Hydrochinon |
| V | 4,4'-Dihydroxydiphenyl |
| VI | t-Butylhydrochinon |
| VII | 3,3',5,5'-Tetramethyl-4,4'-dihydroxydiphenyl |
| VIII | 4,4'-Di-(p-hydroxyphenoxy)diphenylsulfon |
| IX | Methyl-, Phenyl-, Chlorhydrochinon (n = 1) |
| X | 2,6-Dihydroxyanthrachinon |
| XI | 2,7-Dihydroxynaphthalin |
| XIII | Resorcin (1,3-Dihydroxybenzol). |

Es versteht sich, daß auch funktionelle Derivate der vorstehenden Verbindung eingesetzt werden können, sofern diese unter den Reaktionsbedingungen bei der Herstellung der Polyesterblöcke A) die gleichen wiederkehrenden Einheiten ergeben.

Das molare Verhältnis der Komponenten $a_{2)}$ : $a_{3)}$ liegt im Bereich von 0,9 : 1 bis 1,1 : 1, vorzugsweise 0,95 : 1 bis 1,05 : 1 und insbesondere von 0,98 : 1 bis 1,04 : 1.

Nachstehend werden einige bevorzugte Arten der Komponente A) etwas detaillierter beschrieben.

1. Vollaromatische thermotrope Polyesterblöcke, aufgebaut aus
   $a_{1)}$ 20 bis 70 mol-% wiederkehrenden Einheiten der Formel I
   $a_{2)}$ 15 bis 40 mol-% einer Mischung aus
      $a_{21)}$ 50 bis 100 mol-%, bezogen auf $a_{21)}$ + $a_{22)}$, wiederkehrenden Einheiten der Formel II und
      $a_{22)}$ 0 bis 50 mol-%, bezogen auf $a_{21)}$ + $a_{22)}$, wiederkehrenden Einheiten der Formel III und
   $a_{3)}$ 15 bis 40 mol-% einer Mischung aus
      $a_{311)}$ 30 bis 70 mol-%, bezogen auf $a_{311)}$ + $a_{312)}$, wiederkehrenden Einheiten der Formel IV und
      $a_{312)}$ 30 bis 70 mol-%, bezogen auf $a_{311)}$ + $a_{312)}$, wiederkehrenden Einheiten der Formel V,

wobei das molare Verhältnis der Komponenten $a_{2)}$ : $a_{3)}$ im Bereich von 0,9 : 1 bis 1,1 : 1 liegt.

2. Vollaromatische thermotrope Polyesterblöcke, aufgebaut aus

$a_{1)}$ 10 bis 60 mol-% wiederkehrenden Einheiten der Formel I,

$a_{2)}$ 20 bis 45 mol-% wiederkehrenden Einheiten der Formel II, und

$a_{3)}$ 20 bis 45 mol-% einer Mischung aus

$a_{311)}$ 20 bis 50 mol-%, bezogen auf die Summe $a_{311)}$ + $a_{312)}$ + $a_{314)}$, wiederkehrenden Einheiten der Formel IV,

$a_{312)}$ 20 bis 50 mol-%, bezogen auf die Summe $a_{311)}$ + $a_{312)}$ + $a_{314)}$, wiederkehrenden Einheiten der Formel V, und

$a_{314)}$ 25 bis 60 mol-%, bezogen auf die Summe $a_{311)}$ + $a_{312)}$ + $a_{314)}$, wiederkehrenden Einheiten der Formel VII,

wobei das molare Verhältnis der Komponenten $a_{2)}$ : $a_{3)}$ im Bereich von 0,9 : 1 bis 1,1 : 1 liegt.

Bis zu 50 mol-% des Anteils der wiederkehrenden Einheiten der Formeln IV und/oder V können in derartigen Polykondensaten auch durch wiederkehrende Einheiten der Formeln

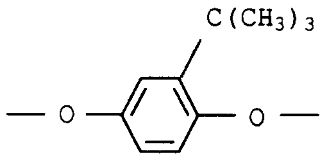

(VI)

und/oder Einheiten der Formel (IXa)

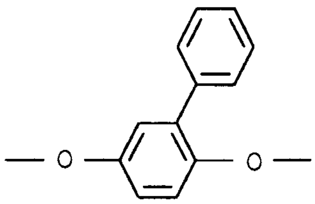

(IXa)

ersetzt werden, wobei der Anteil dieser Einheiten insgesamt vorzugsweise 2 bis 20 mol-%, der Anteil der Einheiten der Formeln VI, VII und IX insgesamt vorzugsweise 20 bis 40 mol-% beträgt.

Auch der Ersatz von bis zu 50 mol-% der Einheiten der Formeln IV und/oder V durch wiederkehrende Einheiten der Formeln

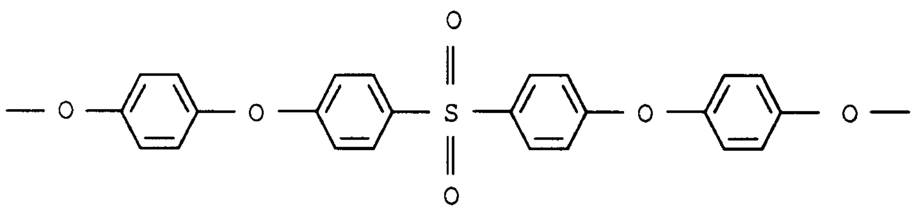

(VIII)

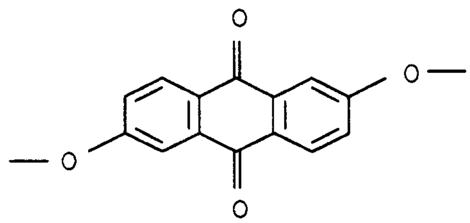

(X)

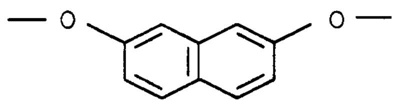

(XI)

oder

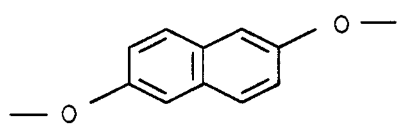

(XII)

ist möglich, wobei der Anteil der Summe der wiederkehrenden Einheiten der Formeln VII, VIII und X bis XII vorzugsweise 20 bis 40 mol-% beträgt.

3. Vollaromatische thermotrope Polyesterblöcke, aufgebaut aus

$a_{1)}$ 10 bis 84 mol-% wiederkehrenden Einheiten der Formel I,

$a_{2)}$ 8 bis 45 mol-% einer Mischung aus

$a_{21)}$ 50 bis 100 mol-%, bezogen auf $a_{21)}$ + $a_{22)}$, wiederkehrenden Einheiten der Formel II und

$a_{22)}$ 0 bis 50 mol-%, bezogen auf $a_{21)}$ + $a_{22)}$, wiederkehrenden Einheiten der Formel III, und

$a_{3)}$ 8 bis 45 mol-% einer Mischung aus

$a_{312)}$ 25 bis 60 mol-%, bezogen auf die Summe a $_{312)}$ + $a_{313)}$, wiederkehrenden Einheiten der Formel V, und

$a_{313)}$ 40 bis 75 mol-%, bezogen auf die Summe $a_{312)}$ + $a_{313)}$, wiederkehrenden Einheiten der Formel VI,

wobei das molare Verhältnis der Komponenten $a_{2)}$ : $a_{3)}$ im Bereich von 0,9 : 1 bis 1,1 : 1 liegt.

In derartigen Produkten können bis zu 50 mol-% der wiederkehrenden Einheiten der Formel V ersetzt werden durch wiederkehrende Einheiten der Formeln IV, X, XII und/oder XIII. Der Anteil der Einheiten der Formel VI liegt vorzugsweise im Bereich von 15 bis 25 mol-%, unabhängig davon, ob daneben nur Einheiten der Formel V oder aber auch Einheiten der Formeln IV, X, XII und/oder XIII enthalten sind.

4. Vollaromatische thermotrope Polyesterblöcke, aufgebaut aus

$a_{1)}$ 10 bis 70, vorzugsweise 20 bis 50 mol-% wiederkehrenden Einheiten der Formel I,

$a_{2)}$ 15 bis 45, vorzugsweise 25 bis 40 mol-% wiederkehrenden Einheiten der Formel II, und

$a_{3)}$ 15 bis 45, vorzugsweise 25 bis 40 mol-% einer Mischung aus

$a_{313)}$ 30 bis 75, vorzugsweise 35 bis 65 mol-%, bezogen auf die Summe $a_{313)}$ + $a_{315)}$, wiederkehrenden Einheiten der Formel VI und

$a_{315)}$ 25 bis 70, vorzugsweise 35 bis 65 mol-%, bezogen auf die Summe $a_{313)}$ + $a_{315)}$, wiederkehrenden Einheiten der Formel VIII,

wobei das molare Verhältnis der Komponenten $a_{2)}$ : $a_{3)}$ im Bereich von 0,9 : 1 bis 1,1 : 1 liegt.

Gemäß einer Variante solcher Produkte können bis zu 50 mol-% der wiederkehrenden Einheiten der Formel VI ersetzt werden durch wiederkehrende Einheiten der Formeln IV, V und/oder IX, wobei die Summe der Anteile der Einheiten IV und V, vorzugsweise 5 bis 40 mol-%, und der Anteil der Einheiten IX vorzugsweise 5 bis 50 mol-%, jeweils bezogen auf die Summe der wiederkehrenden Einheiten $a_{313)}$ +

$a_{315)}$, betragen.

5. Vollaromatische thermotrope Polyesterblöcke, aufgebaut aus

$a_{1)}$ 10 bis 84, vorzugsweise 20 bis 70 mol-%, wiederkehrenden Einheiten der Formel I

$a_{2)}$ 8 bis 45, vorzugsweise 15 bis 40 mol-%, wiederkehrenden Einheiten der Formel II, und

$a_{3)}$ 8 bis 45, vorzugsweise 15 bis 40 mol-%, einer Mischung aus

$a_{316)}$ 30 bis 80, vorzugsweise 35 bis 70 mol-%, bezogen auf die Summe $a_{316)}$ + $a_{317)}$, wiederkehrenden Einheiten der Formeln VI und/oder V, und

$a_{317)}$ 20 bis 70, vorzugsweise 30 bis 65 mol-%, bezogen auf $a_{316)}$ + $a_{317)}$, wiederkehrenden Einheiten der Formel VIII,

wobei das molare Verhältnis der Komponenten $a_{2)}$ : $a_{3)}$ im Bereich von 0,9 : 1 bis 1,1 : 1 liegt.

Besonders bevorzugt sind vollaromatische thermotrope Polyesterblöcke, bei denen die Komponente $a_{3)}$ zu 100 mol-%, bezogen auf die Summe $a_{31)}$ + $a_{32)}$, aus $a_{31)}$ besteht, insbesondere die unter Punkt 1 beschriebenen vollaromatischen thermotropen Polyesterblöcke.

Vollaromatische thermotrope Polyesterblöcke der vorstehend beschriebenen Arten sowie ihre Herstellung sind beispielsweise in der EP-A 139 303, EP-A 226 839, EP-A 226 078, EP-A 225 539, EP-A 226 847 und EP-A 257 558 beschrieben, auf die hier wegen näherer Einzelheiten verwiesen sei.

Als Komponente B) enthalten die erfindungsgemäßen hochtemperaturbeständigen Blockcopolykondensate 2 bis 50 Gew.-%, vorzugsweise 5 bis 40 Gew.-%, insbesondere 7 bis 35 Gew.-% Polyaryletherketonblöcke, aufgebaut aus Einheiten der allgemeinen Formel XIV

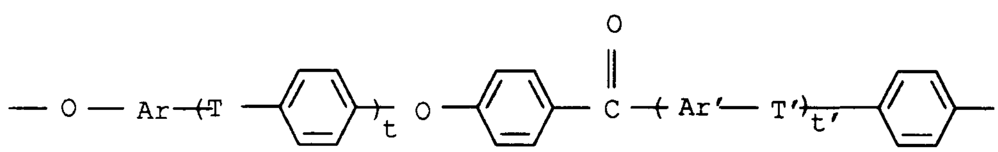

(XIV)

wobei t und t' jeweils den Wert 0, 1, 2 oder 3 annehmen können, T und T' ein Sauerstoffatom oder eine Carbonylgruppe bedeuten und Ar und Ar' für Arylgruppen mit 6 bis 14 C-Atomen stehen, insbesondere für 1,4-Phenylen, 1,3-Phenylen, Biphenylen und Naphthylen. Grundsätzlich können die aromatischen Einheiten der Polyaryletherketonblöcke XIV mit $C_1$- bis $C_8$-Alkyl-, $C_6$- bis $C_{20}$-Arylresten oder Halogenatomen substituiert sein. Im allgemeinen werden jedoch die unsubstituierten Derivate bevorzugt. Beispiele für besonders bevorzugte Einheiten der allgemeinen Formel XIV sind

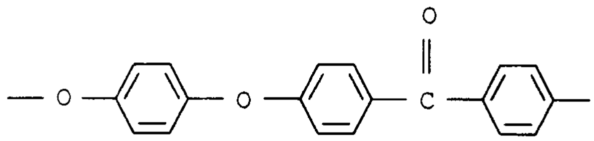

(XIVa)

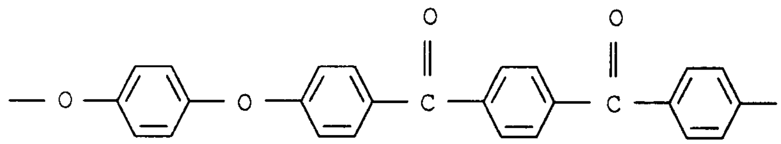

(XIVb)

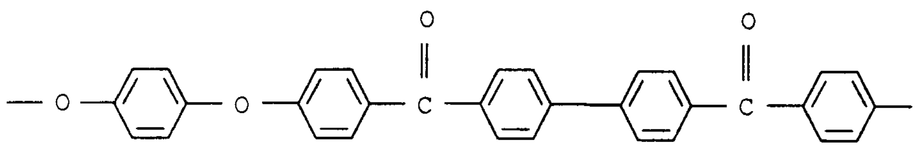

(XIVc)

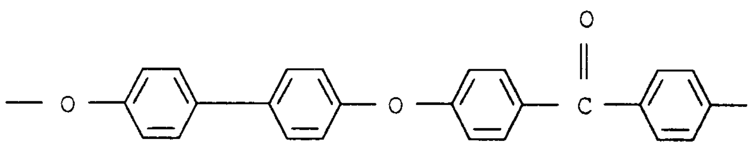

(XIVd)

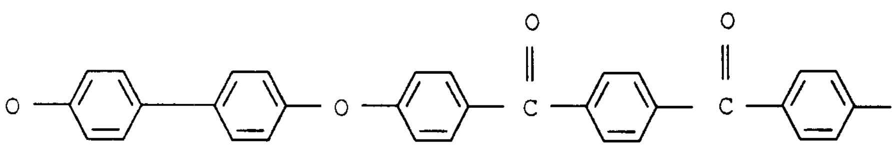

(XIVe)

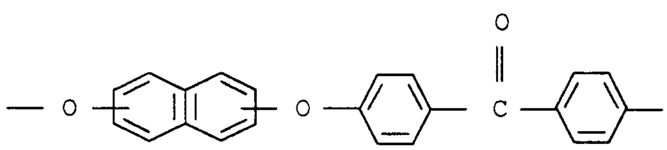

(XIVf)

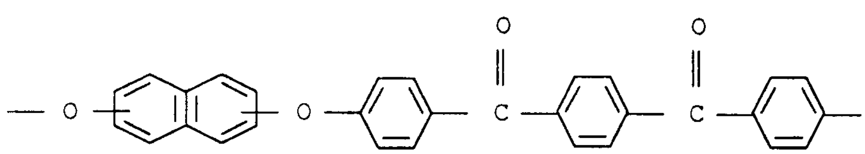

(XIVg)

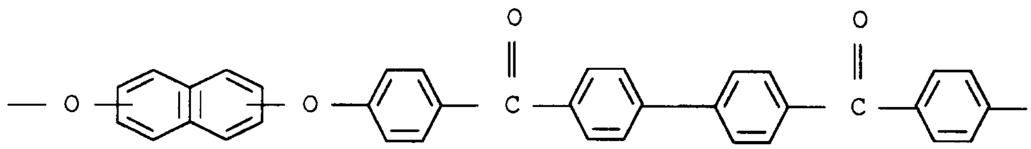

(XIVh)

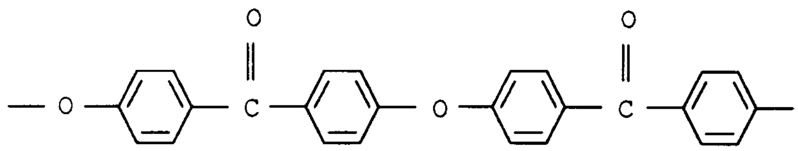

(XIVi)

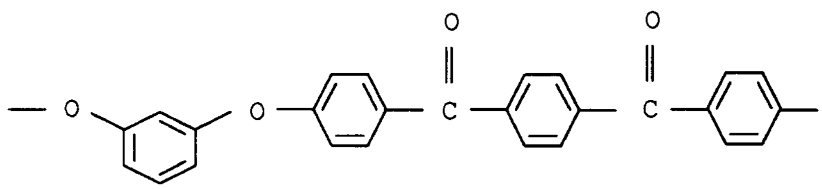

(XIVj)

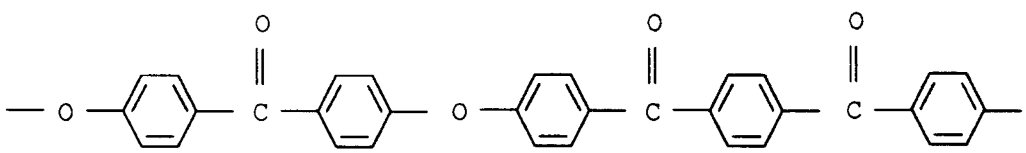

(XIVk)

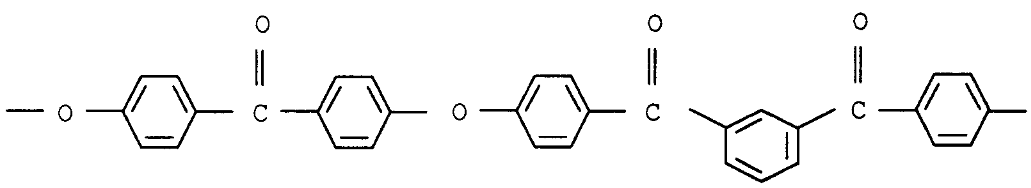

(XIVl)

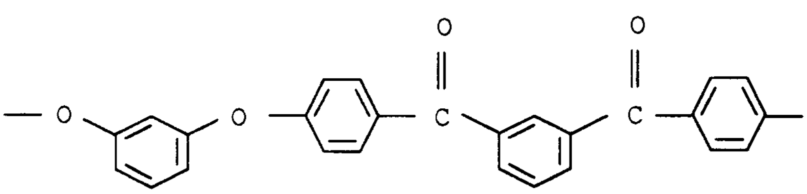

(XIVm)

Insbesondere sind die Einheiten XIVa, XIVb, XIVd, XIVe, XIVi, XIVj, XIVk und XIVl zu nennen.

Als Komponente B) sind auch statistische Copolymerisate oder Blockcopolymerisate aus Einheiten der allgemeinen Formel XIV bevorzugt. Hier sind insbesondere Copolymere aus den Einheiten XIVk und XIVl zu nennen, wobei das Mol-Verhältnis von XIVk zu XIVl i.a. im Bereich von 9:1 bis 1:1 liegt.

Die Polyaryletherketonblöcke der allgemeinen Formel XIV können nach zwei unterschiedlichen, an sich bekannten Verfahren hergestellt werden. Beim sogenannten nucleophilen Polykondensationsverfahren wird die Sauerstoffbrücke gebildet, indem z.B. aromatische Dihydroxyverbindungen mit Difluorketonen unter Basenkatalyse umgesetzt werden. Ein solches Verfahren ist beispielsweise in der EP-A-1879 beschrieben.

Eine zweite Möglichkeit zur Herstellung von Polyaryletherketonen ist die elektrophile (Friedel-Crafts)-Polykondensation wie z.B. in der EP-A 138 990 beschrieben. Hierbei werden zur Bildung der Carbonylbrükke entweder aromatische Dicarbonsäuredichloride oder Phosgen mit Aromaten, welche zwei - durch elektrophile Substitution austauschbare - Wasserstoffatome enthalten, umgesetzt, oder es wird ein aromatisches Carbonsäurechlorid, das sowohl eine Säurechloridgruppe als auch ein substituierbares Wasserstoffatom enthält, mit sich selbst polykondensiert.

Arbeitet man mit einem Überschuß an Dihydroxyverbindungen, so erhält man dihydroxyterminierte Polyaryletherketonblöcke, dicarboxylterminierte Polyaryletherketonblöcke lassen sich mit einem Überschuß an Dicarbonylverbindungen herstellen. Je größer der entsprechende Überschuß ist, umso geringer wird das Molekulargewicht der Polyaryletherketonblöcke. Nach einem Verfahren, wie es beispielsweise in H.G. Elias, Makromoleküle, Band 1, Kapitel 7.2, Hüthig & Wepf Verlag, Basel (1990) beschrieben ist, kann für nichtstöchiometrische Polykondensationen das Zahlenmittel des Polymerisationsgrades berechnet werden. Die als Komponente B) eingesetzten Polyaryletherketonblöcke sind teilkristallin und weisen mittlere Molekulargewichte $\overline{M}_n$ (Zahlenmittel) von 2200 bis 30 000, bevorzugt 2500 bis 20 000, insbesondere von 2800 bis 15000 auf.

Weiterhin können die erfindungsgemäßen hochtemperaturbeständigen Blockcopolykondensate als Komponente C) faser- oder teilchenförmige Füllstoffe, sowie deren Mischungen, in Mengen von 0 bis 100 Gew.-%, bezogen auf A) + B), insbesondere von 0 bis 80 Gew.-%, enthalten. Als verstärkend wirkende Füllstoffe seien beispielsweise Asbest oder Fasern aus Aramid, Glas oder Kohlenstoff genannt, die sowohl als Kurzfasern als auch als Endlosfasern eingesetzt werden können. Weiterhin können Pigmente wie Titandioxid, Cadmium- oder Zinksulfid, Bariumsulfat und Ruß zugemischt werden. Als weitere Zusatz- und Hilfsstoffe kommen verschiedene Stabilisatoren und übliche Verarbeitungshilfsmittel in Betracht.

Zur Herstellung der erfindungsgemäßen hochtemperaturbeständigen Blockcopolykondensate können die üblichen, dem Fachmann an sich bekannten Verfahren zur Blockcopolykondensation angewandt werden. In einer bevorzugten Ausführungsform werden die zur Bildung der vollaromatischen thermotropen Polyesterblöcke A) erforderlichen Monomeren in Gegenwart der dihydroxy- oder dicarboxylterminierten Polyaryletherketonblöcken B) umgesetzt. Werden als Komponente B) dihydroxyterminierte Polyaryletherketonblöckeverwendet, so hat es sich als geeignet erwiesen, wenn die dicarboxylterminierten Monomeren, die zur Bildung der vollaromatischen thermotropen Polyesterblöcke A) erforderlich sind, zumindest teilweise im Überschuß eingesetzt werden. Ebenso ist es natürlich von Vorteil, wenn die dihydroxyterminierten Monomeren, die zur Bildung der Komponente A) erforderlich sind, im Überschuß eingesetzt werden, falls die Komponente B) aus dicarboxylterminierten Polyaryletherketonblöcken besteht. Üblicherweise wird der Überschuß so gewählt, daß die Blockcopolykondensation mit stöchiometrischen Mengen an dihydroxy- und dicarboxylterminierten Verbindungen ablaufen kann.

Vorteilhafterweise wird die Kondensationsreaktion unter Zusatz eines 5 bis 60, insbesondere 10 bis 50 mol-%igen Überschusses, bezogen auf den Gesamtgehalt an Hydroxylgruppen, eines Anhydrids einer Alkancarbonsäure mit 2 bis 6 C-Atomen in einem einstufigen Verfahren durchgeführt. Bevorzugt werden Essigsäureanhydrid, Propionsäureanhydrid und Buttersäureanhydrid, insbesondere jedoch Essigsäureanhydrid verwendet.

Die Kondensationsreaktion kann in der Schmelze oder unter Zusatz eines Lösevermittlers durchgeführt werden. Bevorzugt ist die Reaktion unter Zusatz eines Lösevermittlers, wobei als Lösevermittler hochsiedende Glycolether der allgemeinen Formel

$$R^1\text{-O-}(CH_2)_2[\text{-O-}(CH_2)_2\text{-}]_p\text{-O-}R^2$$

mit $R^1$, $R^2$ $C_1$- bis $C_{10}$-Alkylgruppen und p eine ganze Zahl von 0 bis 4 verwendet werden.

Bevorzugt sind symmetrische Glycolether mit $R^1 = R^2$ und $p = 1$ bis 3, insbesondere Diethylenglycoldibutylether.

Mischungen verschiedener Glycolether können ebenfalls verwendet werden, Mischungen mit anderen hochsiedenden Lösungsmitteln wie Alkylbenzole mit 7 bis 12 C-Atomen, Halogenbenzole mit 1 bis 3 Halogenatomen sowie teil- oder vollhydrierte Naphthalin-, Biphenyl- oder Terphenylderivate sind ebenfalls möglich.

Als Lösevermittler sind auch N-alkylierte Lactame wie N-Methyl-2-pyrrolidinon geeignet.

Die Menge an eingesetztem Lösevermittler beträgt i.a. 20 bis 80 Gew.-%, bezogen auf das Gesamtgewicht der eingesetzten Reaktionskomponenten.

Weiterhin ist es vorteilhaft, die Umsetzung unter Inertgasatmosphäre, z.B. unter Stickstoff oder Argon, durchzuführen.

Es kann auch von Vorteil sein, die Umsetzung durch Verwendung von Katalysatoren, wie Salzen niederer Carbonsäuren, die z.B. in der EP-A 131 846 beschrieben sind, zu beschleunigen. In diesem Fall

beträgt die Menge an Katalysatoren 0,001 bis 1 Gew.-%, bezogen auf die Gesamtmenge an eingesetzten Edukten.

In einer besonders bevorzugten Ausführungsform werden die zur Herstellung der Monomeren $a_{1)}$ bis $a_{3)}$ geeigneten Verbindungen, die Komponente B), ein Carbonsäureanhydrid und gegebenenfalls ein Lösevermittler unter Inertgasatmosphäre vermischt und unter Rühren bis zum Siedepunkt des Carbonsäureanhydrids erhitzt. Anschließend wird die Temperatur stufenweise erhöht, indem man die Reaktionsmischung bis zu 5 Stunden, vorzugsweise bis zu 3 Stunden bei einer Temperatur von 130 bis 300 °C hält und anschließend die Temperatur vorzugsweise innerhalb eines Zeitraums von 1 bis 3 Stunden auf 300 bis 400 °C erhöht. Dabei werden im Verlauf der Reaktion überschüssiges Carbonsäureanhydrid, gebildete Carbonsäuren und gegebenenfalls zugesetztes Lösemittel abdestilliert.

Um eine möglichst quantitative Umsetzung zu erreichen, ist es vorteilhaft, in der letzten Phase der Reaktion bei verringertem Druck, vorzugsweise im Bereich von 0,1 bis 200 mbar (10 bis 20.000 Pa) zu arbeiten.

Die so erhaltenen Produkte können anschließend einer Nachkondensation in fester Phase unterworfen werden. Diese wird vorzugsweise bei Temperaturen im Bereich von 200 bis 300 °C, insbesondere von 200 bis 280 °C, vorgenommen. Es ist auch möglich, die Nachkondensation in fester Phase nach einer thermoplastischen Verarbeitung vorzunehmen.

Vorteilhafterweise wird auch die Kondensation in fester Phase unter Inertgasatmosphäre, z.B. unter Stickstoff oder Argon, durchgeführt. Gegebenenfalls wird danach die Komponente C) zugemischt.

Die inhärente Viskosität der erfindungsgemäßen Blockcopolykondensate, bestimmt an einer 0,1 gew.-%igen Lösung in Pentafluorphenol bei 60 ° 0, liegt vorzugsweise im Bereich von 1 bis 6, insbesondere von 1,5 bis 5 dl/g.

Die erfindungsgemäßen hochtemperaturbeständigen Blockcopolykondensate zeichnen sich insgesamt durch ein ausgewogenes Eigenschaftsspektrum - wie ausgezeichneter Wärmeform- und Chemikalienbeständigkeit bei guter Zähigkeit und exzellenter Fließfähigkeit - aus und sind zur Herstellung von Fasern, Folien und Formkörpern geeignet.

Beispiele

Herstellung von hochtemperaturbeständigen Blockcopolykondensaten

Beispiel 1

Es wurden folgende Komponenten eingesetzt:

120 mmol (≙ 42,6 mol-%) 4-Hydroxybenzoesäure
56 mmol (≙ 19,8 mol-%) Terephthalsäure
24 mmol (≙ 8,6 mol-%) Isophthalsäure
41 mmol (≙ 14,5 mol-%) Hydrochinon
41 mmol (≙ 14,5 mol-%) 4,4'-Dihydroxybiphenyl (zusammen 70 Gew.-%)
und
2 mmol (30 Gew.-%) eines dicarboxylterminierten Polyaryletherketonblocks, aufgebaut aus einem Copolymerisat der Einheiten

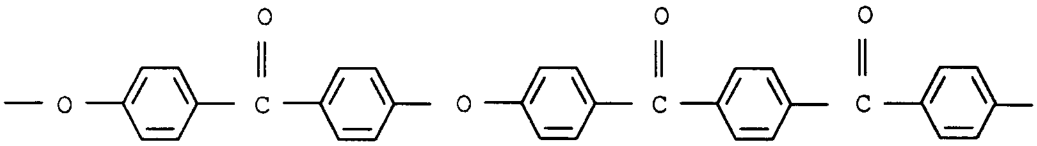

(XIVk)

und

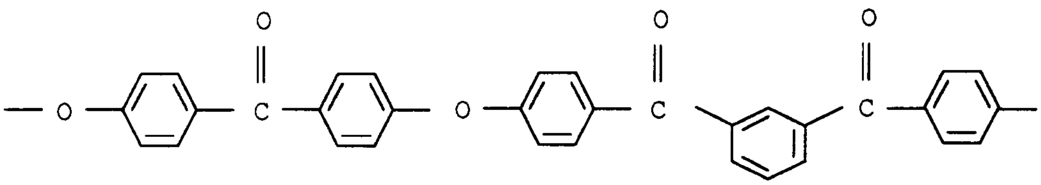

(XIVl)

im Molverhältnis XIVk zu XIVl von 1,5:1, mit einem mittleren Molekulargewicht $\overline{M}_n$ (Zahlenmittel) von 8500 und einem Schmelzpunkt von 352 °C.

Die Ausgangskomponenten, 384 mmol Essigsäureanhydrid und 120 ml Diethylenglycoldibutylether wurden unter Stickstoffatmosphäre vermischt, unter Rühren innerhalb von 125 min auf 255 °C Außentemperatur erhitzt und 180 min bei dieser Temperatur gehalten. In weiteren 70 min wurde auf 360 °C Außentemperatur erwärmt und dann über einen Zeitraum von 75 min der Druck auf ein Endvakuum von 5 mbar reduziert. Danach wurde mit Stickstoff belüftet, die Wärmezufuhr unterbrochen und das Polymer aus dem Reaktionsgefäß entfernt.

Das erhaltene Polymer ergab eine fadenbildende mesomorphe Schmelze.

Die inhärente Viskosität, gemessen an einer 0,1 gew.-%igen Lösung in Pentafluorphenol bei 60 °C, betrug 2,16 dl/g.

Aus DSC-Messungen (Differential Scanning Calorimetry) ergab sich ein Schmelzpunkt von 341 °C; aus der Torsionsschwingungsanalyse ergaben sich zwei Glaspunkte bei 116 und 156 °C.

Beispiel 2

Es wurden folgende Komponenten eingesetzt:
7,80 mol (≙ 42,40 mol-%) 4-Hydroxybenzoesäure
3,77 mol (≙ 20,50 mol-%) Terephthalsäure
1,62 mol (≙ 8,70 mol-%) Isophthalsäure
2,60 mol (≙ 14,15 mol-%) Hydrochinon
2,60 mol (≙ 14,15 mol-%) 4,4'-Dihydroxybiphenyl (zusammen 80 Gew.-%)
und
0,18 mol (20 Gew.-%) eines dihydroxyterminierten Polyaryletherketonblocks, aufgebaut aus einem Copolymerisat der Einheiten

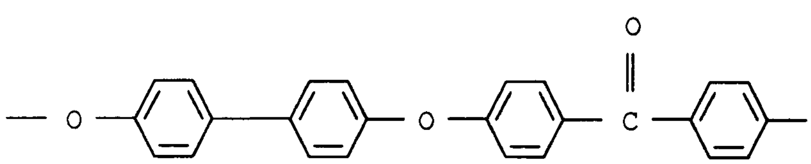

(XIVd)

und

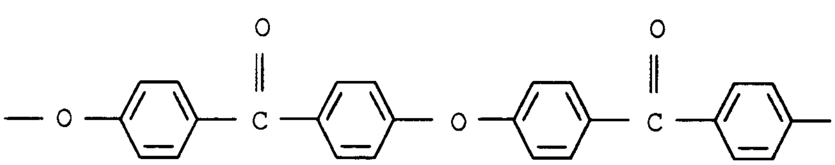

(XIVi)

im Molverhältnis XIVd zu XIVi von 1:1, mit einem mittleren Molekulargewicht $\overline{M}_n$ (Zahlenmittel) von 4000 und einem Schmelzpunkt von 325 ° C.

Die Ausgangskomponenten, 2560 ml (≙ 25 mol) Essigsäureanhydrid und 2000 ml N-Methyl-2-pyrrolidinon wurden unter Stickstoffatmosphäre vermischt, unter Rühren innerhalb von 80 min auf 186 ° C Außentemperatur und in weiteren 180 min auf 351 ° C Außentemperatur erhitzt. Im Anschluß daran wurde der Druck innerhalb von 50 min auf 80 mbar gesenkt und innerhalb von weiteren 5 min auf 50 mbar, wobei die Außentemperatur bei 351 ° C gehalten wurde. Die Polymerschmelze wurde bei einer Temperatur von 340 ° C durch eine Düse gepreßt und dann granuliert.

Das Blockcopolymer ergab eine fadenbildende mesomorphe Schmelze.

Die inhärente Viskosität des erhaltenen Polymeren betrug 1,98 dl/g, gemessen an einer 0,1 gew.-%igen Lösung in Pentafluorphenol bei 60 ° C.

Aus DSC-Messungen (Differential Scanning Calorimetry) ergab sich ein Schmelzpunkt von 317 ° C; aus der Torsionsschwingungsanalyse zwei Glaspunkte bei 112 und 145 ° C.

Das Polymer ließ sich bei 350 ° C problemlos im Spritzguß verarbeiten. Die Schmelzeviskosität bei 360 ° C und einer Schergeschwindigkeit von 100 1/s betrug 45 Pa•s, bei 1000 1/s 17 Pa•s.

Die Vicat-Erweichungstemperatur, bestimmt an spritzgegossenen Probekörpern nach DIN 53 460 Methode B/50, betrug 170 ° C.

Die Schlagbiegezähigkeit $a_n$ (DIN 53 453) bei 23 ° C betrug 54,6 kJ/$m^2$.

Die Grenztemperatur im Lötbadtest, bei dem ein Flachstab mit den Maßen 127 mm * 12,7 mm * 1,6 mm für 10 s in ein Lötzinnbad getaucht wird, betrug 270 ° C. Dies bedeutet, daß der Probekörper bei dieser Temperatur keine Veränderungen an der Oberfläche aufwies und dimensionsstabil war.

Vergleichsbeispiele

Vergleichsbeispiel V1

Herstellung eines vollaromatischen thermotropen Polyesters

Es wurden folgende Komponenten eingesetzt:

9,0 mol (≙ 42,8 mol-%) 4-Hydroxybenzoesäure
4,2 mol (≙ 20,0 mol-%) Terephthalsäure
1,8 mol (≙ 8,6 mol-%) Isophthalsäure
3,0 mol (≙ 14,3 mol-%) Hydrochinon
3,0 mol (≙ 14,3 mol-%) 4,4'-Dihydroxybiphenyl

Die Ausgangskomponenten und 28,35 mol Essigsäureanhydrid wurden unter Stickstoffatmosphäre vermischt, unter Rühren innerhalb von 65 min auf 160 ° C Außentemperatur und in weiteren 190 min auf 350 ° C Außentemperatur erhitzt. Im Anschluß daran wurde der Druck innerhalb von 48 min auf 200 mbar gesenkt, wobei die Außentemperatur bei 350 ° C gehalten wurde. Die Polymerschmelze wurde bei einer Temperatur von 340 ° C durch eine Düse gepreßt und dann granuliert.

Das Polymer ergab eine fadenbildende mesomorphe Schmelze.

Die inhärente Viskosität des erhaltenen Polymeren betrug 2,41 dl/g, gemessen an einer 0,1 gew.-%igen Lösung in Pentafluorphenol bei 60 ° C.

Aus DSC-Messungen (Differential Scanning Calorimetry) ergab sich ein Schmelzpunkt von 315 ° C.

Die Vicat-Erweichungstemperatur, bestimmt an spritzgegossenen Probekörpern nach DIN 53 460 Methode B/50, betrug 163 ° C.

Die Schlagbiegezähigkeit $a_n$ (DIN 53 453) bei 23 ° C betrug 26,6 kJ/$m^2$.

Die Grenztemperatur im Lötbadtest (wie unter Beispiel 2 beschrieben) betrug 255 ° C.

Vergleichsbeispiel V2

Herstellung eines Blends aus einem vollaromatischen thermotropen Polyester und einem Polyaryletherketon

75 Gew.-% des vollaromatischen thermotropen Polyesters aus Vergleichsbeispiel V1, hergestellt nach dem in der EP-A 257 558 beschriebenen Verfahren wurden mit
25 Gew.-% eines Polyaryletherketons, aufgebaut aus Einheiten der Formel XIVk und hergestellt nach dem in der EP-A 138 990 beschriebenen Verfahren
auf einem Zweischneckenkneter bei 390 ° C gemischt, die Schmelze durch eine Düse gepreßt, abgekühlt und granuliert.

Aus DSC-Messungen (Differential Scanning Calorimetry) ergab sich ein Schmelzpunkt von 386°C.

Die Schlagbiegezähigkeit $a_n$ (DIN 53 453), bestimmt an spritzgegossenen Normkleinstäben der Abmessungen 50 mm * 6 mm * 4 mm, betrugt 20,2 kJ/m$^2$.

Die Grenztemperatur im Lötbadtest (wie unter Beispiel 2 beschrieben) betrug 230°C.

**Patentansprüche**

**1.** Hochtemperaturbeständige Blockcopolykondensate, enthaltend als wesentliche Komponenten

A) 50 bis 98 Gew.-% vollaromatische thermotrope Polyesterblöcke, aufgebaut aus

$a_{1)}$ 10 bis 90 mol-% wiederkehrenden Einheiten der Formel I

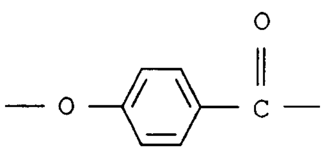

(I)

$a_{2)}$ 5 bis 45 mol-% einer Mischung aus

$a_{21)}$ 50 bis 100 mol-%, bezogen auf die Summe $a_{21)}$ + $a_{22)}$, wiederkehrenden Einheiten der Formel II

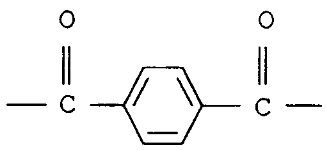

(II)

und

$a_{22)}$ 0 bis 50 mol-%, bezogen auf die Summe $a_{21)}$ + $a_{22)}$, wiederkehrenden Einheiten der Formel III

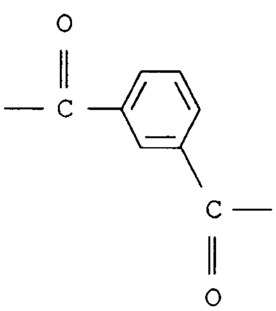

(III)

und

$a_{3)}$ 5 bis 45 mol-% einer Mischung aus

$a_{31)}$ 50 bis 100 mol-%, bezogen auf die Summe $a_{31)}$ + $a_{32)}$, mindestens einer der wiederkehrenden Einheiten IV bis VIII

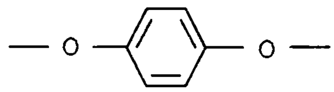

(IV)

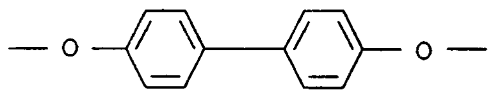

(V)

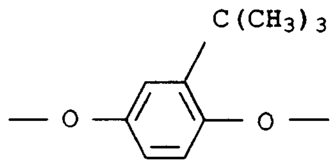

(VI)

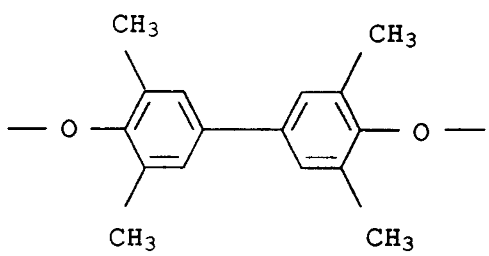

(VII)

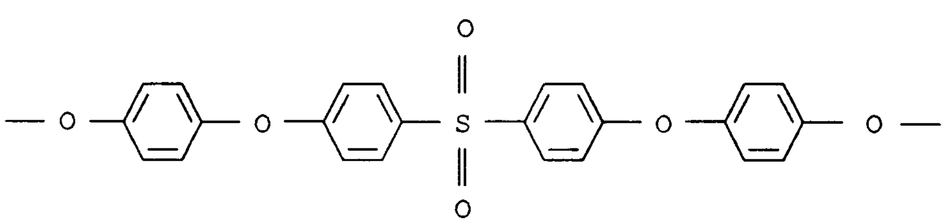

(VIII)

und

$a_{32)}$ 0 bis 50 mol-%, bezogen auf die Summe $a_{31)}$ + $a_{32)}$, mindestens einer der wiederkehrenden Einheiten der Formel IX bis XIII

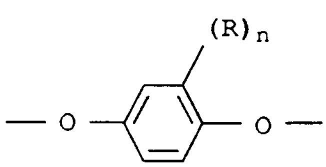

(IX)

wobei R einen Methyl- oder Phenylrest oder ein Chloratom darstellt und n den Wert 1, 2 oder 3 hat,

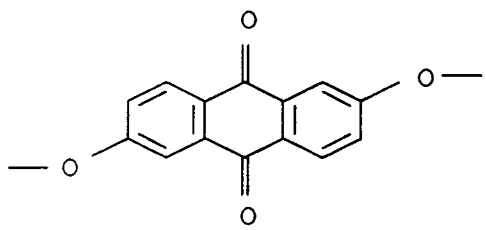

(X)

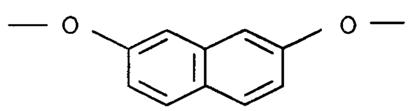

(XI)

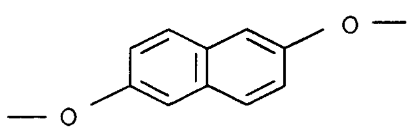

(XII)

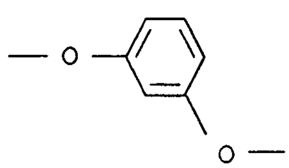

(XIII)

und wobei das molare Verhältnis der Komponenten $a_{2)}$ : $a_{3)}$ im Bereich von 0,9 : 1 bis 1,1 : 1 liegt,

B) 2 bis 50 Gew.-% Polyaryletherketonblöcke mit einem mittleren Molekulargewicht $\overline{M}_n$ -(Zahlenmittel) von 2200 bis 30 000, aufgebaut aus Einheiten der allgemeinen Formel XIV

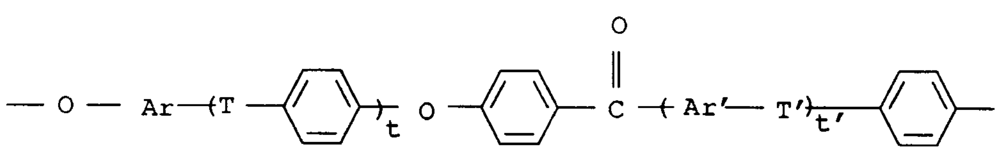

(XIV)

in denen
t und t' jeweils den Wert 0, 1, 2 oder 3 annehmen können,
T und T' -O- oder -CO- bedeuten und
Ar und Ar' für Arylgruppen mit 6 bis 14 C-Atomen stehen oder deren kernstubstituierten $C_1$- bis $C_8$-Alkyl-, $C_6$- bis $C_{20}$-Aryl- oder Halogenderivaten
oder deren statistischen Copolymerisaten oder Blockcopolymerisaten

und

C) 0 bis 100 Gew.-%, bezogen auf die Summe und B), faser- oder teilchenförmige Füllstoffe oder deren Mischungen.

**2.** Hochtemperaturbeständige Blockcopolykondensate nach Anspruch 1, dadurch gekennzeichnet, daß die vollaromatischen thermotropen Polyesterblöcke A) aufgebaut sind aus

$a_{1)}$ 20 bis 70 mol-% wiederkehrenden Einheiten der Formel I

$a_{2)}$ 15 bis 40 mol-% einer Mischung aus

$a_{21)}$ 50 bis 100 mol-%, bezogen auf $a_{21)}$ + $a_{22)}$, wiederkehrenden Einheiten der Formel II und
$a_{22)}$ 0 bis 50 mol-%, bezogen auf $a_{21)}$ + $a_{22)}$, wiederkehrenden Einheiten der Formel III und
$a_{3)}$ 15 bis 40 mol-% einer Mischung aus
$a_{311)}$30 bis 70 mol-%, bezogen auf $a_{311)}$ + $a_{312)}$, wiederkehrenden Einheiten der Formel IV und
$a_{312)}$30 bis 70 mol-%, bezogen auf $a_{311)}$ + $a_{312)}$, wiederkehrenden Einheiten der Formel V,
wobei das molare Verhältnis der Komponenten $a_{2)}$ : $a_{3)}$ im Bereich von 0,9 : 1 bis 1,1 : 1 liegt.

**3.** Hochtemperaturbeständige Blockcopolykondensate nach den Ansprüchen 1 bis 2, dadurch gekennzeichnet, daß die Polyaryletherketonblöcke B) aufgebaut sind aus einem Copolymerisat der Einheiten

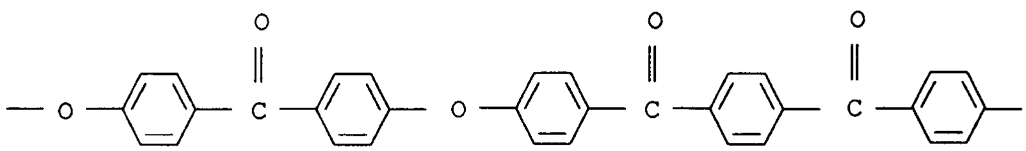

(XIVk)

und

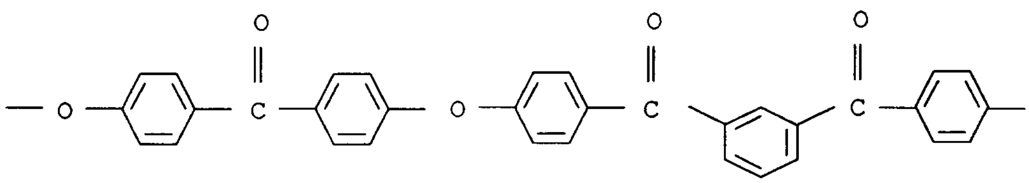

(XIVl)

wobei das molare Verhältnis der Komponenten XIVk zu XIVl im Bereich von 9:1 bis 1:1 liegt.

**4.** Verfahren zur Herstellung von hochtemperaturbeständigen Blockcopolykondensaten gemäß den Ansprüchen 1 bis 3 unter Zusatz eines Lösevermittlers, dadurch gekennzeichnet, daß man als Lösevermittler hochsiedende Glycolether verwendet.

**5.** Verwendung der hochtemperaturbeständigen Blockcopolykondensate gemäß den Ansprüchen 1 bis 3 zur Herstellung von Fasern, Folien und Formkörpern.

**6.** Fasern, Folien und Formkörper, erhältlich aus hochtemperaturbeständigen Blockcopolykondensaten gemäß den Ansprüchen 1 bis 3 als wesentliche Komponente.